# EUROPEAN PATENT SPECIFICATION

(11) **EP 1 688 292 B1**
(45) Date of publication and mention of the grant of the patent: **29.10.2008**
(21) Application number: 05250652.4
(22) Date of filing: 04.02.2005
(51) Int. Cl.: B60K 15/077, B62J 35/00

(54) **Fuel tank**
Kraftstofftank
Réservoir de carburant

(43) Date of publication of application: 09.08.2006
(73) Proprietor: HONDA MOTOR CO., LTD., Tokyo (JP)
(72) Inventor: Tsuruta, Yuichiro c/o K. K. Honda, Wako-shi, Saitama (JP)
(74) Representative: Stevens, Jason Paul

(56) References cited:
- US-A- 4 397 333
- US-A- 5 913 451
- US-A1- 2003 015 536
- US-B1- 6 626 155

## Description

The present invention relates to a fuel tank for vehicle use.

As a fuel tank for vehicle use, there is one provided with a fuel tank body; a fuel feed passage having an inlet opening into the fuel tank body, accepting fuel through this inlet and feeding it to a fuel pump of a fuel injection system; and a return port opening into said fuel tank body, and provided with a fuel return passage for returning surplus fuel from the fuel injection system into the fuel tank body through the return port. There is a fuel tank of this kind in which the fuel feed passage and the fuel return passage are disposed side by side on the bottom part of the fuel tank body, and both the inlet of the fuel feed passage and the return port of the fuel return passage are arranged upward (e.g, see Japanese Utility Model Application Laid-open No. 56-143185 and Japanese Utility Model Application Laid-open No. 54-97626).

Regarding the example cited above, in the conventional structure in which the fuel feed passage and the fuel return passage are disposed side by side on the bottom part of the fuel tank body and both the inlet of the fuel feed passage and the return port of the fuel return passage are arranged upward, the two passages are merely arranged side by side with no particular consideration given for efficient feeding of the returned fuel.

Therefore, it is an aim of the present invention to provide a fuel tank permitting efficient circulation of returned fuel to the feed passage and contributing to increasing the toughness of a fuel pump against bubble disruption and running out of fuel.

US-A-4397333 discloses a fuel tank provided with a fuel tank body, a fuel feed passage having an inlet opening into the fuel tank body and a fuel return passage having a return port opening into the fuel tank body, wherein the fuel feed passage is arranged to accept fuel through the inlet and feed it to a fuel pump of a fuel injection system; wherein the fuel return passage is arranged to return surplus fuel from the fuel injection system into the fuel tank body through the return port; and wherein the return port of the fuel return passage is directed toward the vicinity of the inlet of the fuel feed passage.

The present invention is characterised in that the fuel feed passage and the fuel return passage are positioned in the bottom part of the fuel tank body; wherein the fuel return passage, after rising from the bottom part, bends convexly upward, with the return port directed toward the inlet.

The fuel feed passage and the fuel return passage may be disposed on a common plate-shaped member and fitted to the fuel tank body via the plate-shaped member.

Preferably, the inlet of the fuel feed passage is integrally provided with a filter.

The fuel tank can be installed on a saddle-riding type four-wheeled vehicle.

According to the invention, since the return port of the fuel return passage is disposed toward the vicinity of the inlet of the fuel feed passage, when little fuel remains in the fuel tank body, fuel returned from the fuel injection system into the fuel tank body via the fuel return passage is discharged from the return port of the fuel return passage toward the inlet of the fuel feed passage. Therefore, the fuel returned from the fuel injection system into the fuel tank body via the fuel return passage is effectively accepted through the inlet and fed to the fuel pump via the fuel feed passage. Accordingly, the toughness of the fuel pump against bubble disruption and running out of fuel, which would occur when the quantity of fuel remaining in the fuel tank body has become small, can be enhanced. Moreover, as these features can be realized in a simple structure, there are advantages in weight and cost aspects.

Preferred embodiments of the present invention will now be described by way of example only and with reference to the accompanying drawings, in which:
Fig. 1 shows a perspective view of a vehicle on which a fuel tank in one mode for implementation of the present invention is disposed.
Fig. 2 is a schematic diagram of the fuel tank and a fuel injection system in the mode for implementation of the invention.
Fig. 3 shows a partially enlarged sectional view of the fuel tank in the mode for implementation of the invention.
Fig. 4 shows a partially enlarged sectional view of one variation of the fuel tank in the mode for implementation of the invention.
Fig. 5 shows a partially enlarged sectional view of another variation of the fuel tank in the mode for implementation of the invention.

Incidentally, the left and right and the forward and backward in the following description respectively refer to the left and right and the forward and backward relative to the running direction of the vehicle when it is driving forward.

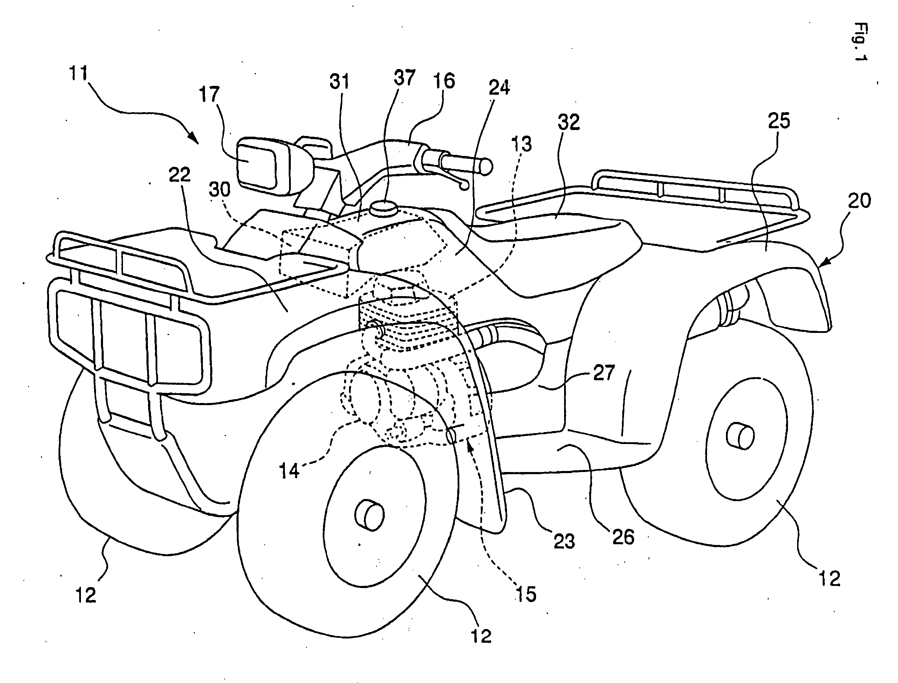

Fig. 1 shows a perspective view of a vehicle to which a fuel tank in this mode for implementation, more specifically a saddle-riding type four-wheeled vehicle (so-called ATV) 11 mainly intended for running on irregular ground, is applied.

This saddle-riding type four-wheeled vehicle 11 has wheels 12 arranged at four corners, front, rear and right, left, of the vehicle body, a power unit 15 having an engine 13 and a transmission 14 arranged in a substantially central position of the vehicle body, a steering bar 16 which is disposed to extend in the left-and-right direction in the upper front part of the vehicle body and to which steering of the front wheels is inputted, a head lamp unit 17 supported by the steering bar 16, and a body cover 20 constituting the outer shell of the vehicle body. Incidentally, this saddle-riding type four-wheeled vehicle 11 is supposed to have a so-called longitudinal crankshaft (not shown), extending in the back-and-forth direction, for the engine 13.

The body cover 20 has a front cover 22 shielding the front part of the vehicle body including the front wheels 12, left and right sub-fenders 23 disposed behind the front cover 22 and shielding the rear part of the front wheels 12, a center cover 24 disposed behind the front cover 22 and shielding the upper part of the vehicle body, a rear cover 25 disposed behind the center cover 24 and shielding the rear part of the vehicle body, left and right mud guards 26 disposed behind the sub- fenders 23 and shielding the flanks of the vehicle body, and left and right engine sub-covers 27 disposed between the rear end side of the center cover 24 and the mud guards 26 and shielding the flanks of the vehicle body. Herein, the front part of the center cover 24 in the middle in the direction of the body width is to serve as a fuel tank covering portion 31 for shielding a fuel tank 30 to be described below. In the rear part of the center cover 24 in the middle in the direction of the body width is disposed a seat 32.

As stated above, the fuel tank 30 in this mode for implementation is disposed underneath the fuel tank covering portion 31 of the center cover 24.

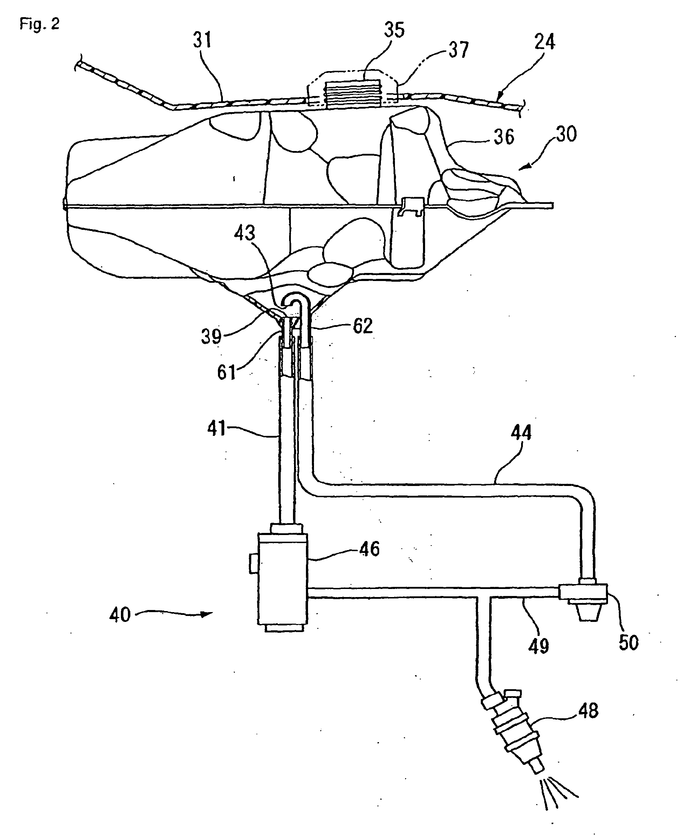

The fuel tank 30 in this mode for implementation, as shown in Fig. 2, is provided with a fuel tank body 36 in the upper part of which is formed a filler 35 protruding upward from the fuel tank covering portion 31 and in which fuel supplied through this filler 35 is stored; a fuel feed passage 41 which, having a tank cap 37 for opening and closing the fuel filler 35 and an inlet 39 opening into the fuel tank body 36, accepts fuel through this inlet 39 and supplies it to a fuel injection system 40 to be described afterwards. The fuel tank also has a fuel return passage 44 which, having a return port 43 opening into the fuel tank body 36, returns surplus fuel from the fuel injection system 40 into the fuel tank body 36 through the return port 43.

The fuel injection system 40 here is an electronically controlled fuel injection system, disposed midway on the fuel feed passage 41, and has a fuel pump 46 which sucks fuel from the fuel tank body 36 via this fuel feed passage 41 and pressure-feeds the sucked fuel further via the fuel feed passage 41. The fuel injection system 40 also has a fuel injection valve 48 which injects the fuel pressure-fed by this fuel pump 46 via the fuel feed passage 41 into the intake manifold (not shown) of the engine 13; a branch passage 49 branching out from between the fuel pump 46 and the fuel injection valve 48 in the fuel feed passage 41; and a fuel pressure regulating valve 50 disposed on this branch passage 49. To add, the aforementioned fuel pressure regulating valve 50 is connected to the fuel return passage 44. The fuel return passage 44 returns surplus fuel discharged from the fuel feed passage 41 by the fuel pressure regulating valve 50 to the fuel tank body 36.

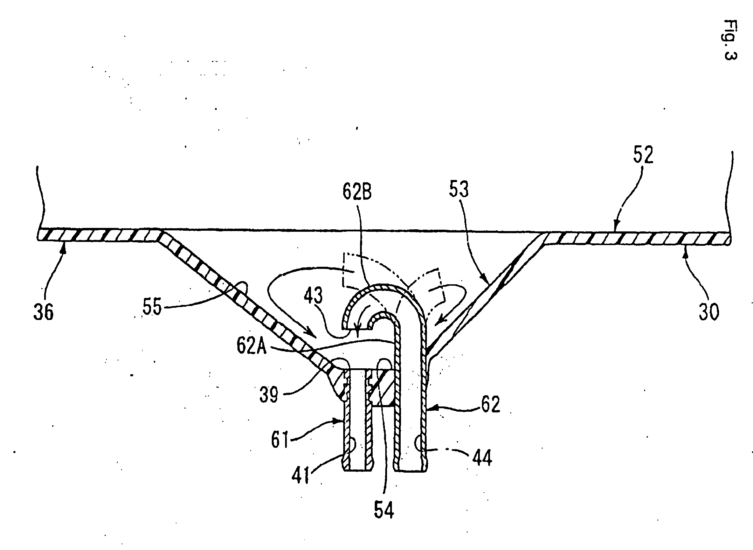

As shown in Fig. 3, a concave portion 53, depressed to a lower level than its circumference, is formed in substantially the central position of the bottom part 52 of the fuel tank body 36 in the horizontal direction. This concave portion 53 is in a substantially tapered shape, with its bottom part 54 arranged horizontally and its wall face 55 positioned more inward in the horizontal direction in the lower portion.

In this mode for implementation, in the bottom part 54 of the concave portion 53 constituting part of the bottom part 52 of the fuel tank body 36 , are disposed a fuel feed passage pipe 61 having inside the aforementioned fuel feed passage 41 and a fuel return passage pipe 62 having inside the aforementioned fuel return passage 44.

The fuel feed passage pipe 61 is embedded in the bottom part 54 of the concave portion 53, and the inlet 39 disposed at its upper end is directed perpendicularly upward so as to be aligned with the upper face 55 of the bottom part.

On the other hand, the fuel return passage pipe 62 has a linear portion 62A rising perpendicularly in a linear shape from the bottom part 54 of the concave portion 53, and a curved portion 62B bending from the upper end of the linear portion 62A in a circular form convex upward so as to be positioned on the fuel feed passage pipe 61. The return port 43 is disposed at the end of the curved portion 62B on the other side to linear portion 62A and is directed downwards. Underneath the return port 43 of this fuel return passage pipe 62 is oppositely arranged the inlet 39 of the fuel feed passage pipe 61. To go into more detail, the return port 43 and the inlet 39 overlap each other in the horizontal direction and, to go into still more detail, the inlet 39, whose diameter is smaller, is arranged within the return port 43, whose diameter is greater, in the horizontal direction. In other words, the fuel return passage pipe 62, namely the return port 43 of the fuel return passage 44, is directed toward the fuel feed passage pipe 61, namely the inlet 39 of the fuel feed passage 41. The return port 43 and the inlet 39 are arranged in a hollow space within the concave portion 53 in both the horizontal direction and the perpendicular direction.

In the mode for implementation so far described, the return port 43 of the fuel return passage 44 is directed toward the inlet 39 of the fuel feed passage 41. Therefore, when the quantity of fuel in the fuel tank body 36 becomes small, fuel returned to the fuel tank body 36 via the fuel return passage 44 from the fuel pressure regulating valve 50 of the fuel injection system 40 is discharged from the return port 43 of the fuel return passage 44 toward the inlet 39 of the fuel feed passage 41. Therefore returned fuel is effectively accepted into the inlet 39 and fed to the fuel pump 46 of the fuel injection system 40 via the fuel feed passage 41. Therefore, bubble disruption of the fuel pump 46, which would occur when the quantity of fuel in the fuel tank body 36 becomes small, can be restrained, and the risk of fuel running out can be minimized. Moreover, as these features can be realized in a simple structure, there are advantages in weight and cost aspects.

Also, it is sufficient for the return port 43 to be directed only toward the vicinity of the inlet 39, and it can be directed toward any part of the wall face 55 of the concave portion 53 (see dotted lines in Figure 3). As the bend of the return port 43 need not be great in that case, manufacturing and assembly are facilitated.

To add, although the return port 43 of the fuel return passage 44 is opposite the inlet 39 of the fuel feed passage 41 in the specific example described above, their positions in the horizontal direction may be shifted providing the return port 43 is arranged toward the vicinity of inlet 39. However, the advantage noted above is greater if the return port 43 is directly opposite the inlet 39.

Further, it is possible to modify the above-described the mode of implementation in the following way.

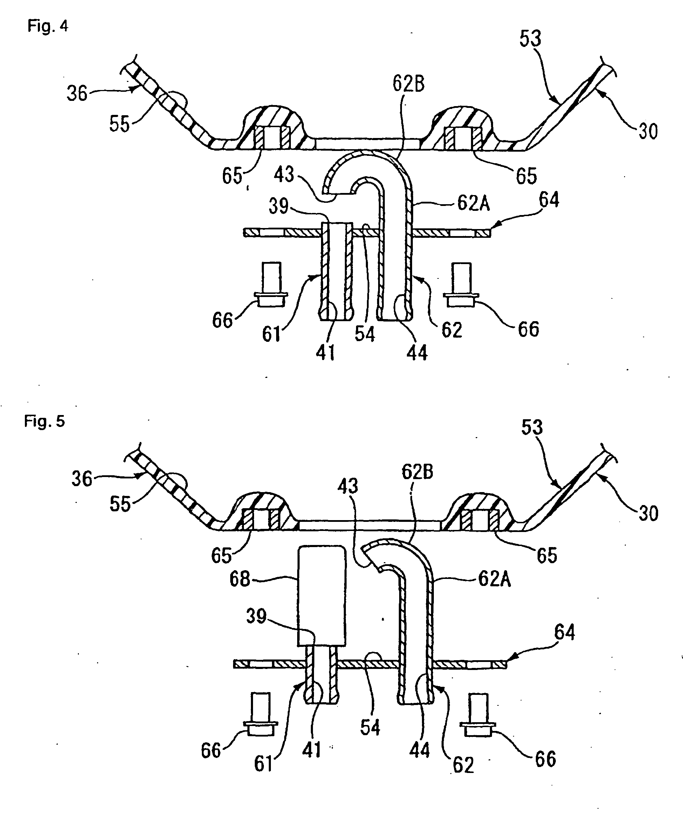

For instance, it is also possible to form the bottom part 54 of the concave portion 53 of the fuel tank body 36 in the plate-shaped member 64 separate from the fuel tank body 36 as shown in Fig. 4. The aforementioned fuel feed passage pipe 61 and the fuel return passage pipe 62, namely the fuel feed passage 41 and the fuel return passage 44, are disposed in advance on this plate-shaped member 64, and the plate-shaped member 64 in this state is then fitted to the fuel tank body 36. In other words, the fuel feed passage 41 and the fuel return passage 44 may be fitted to the fuel tank body 36 via the plate-shaped member 64. In this way, the arrangement of the fuel feed passage 41 and the fuel return passage 44 in the fuel tank body 36 is facilitated. To add, in this case an embedded nut 65 is disposed in the fuel tank body 36 in advance, and the plate-shaped member 64 is fitted to the fuel tank body 36 with a bolt 66 screwed into this embedded nut 65.

Furthermore, as shown in Fig. 5, a filter 68 may be integrally fitted to the inlet 39 of the fuel feed passage pipe 61, namely the fuel feed passage 41. Incidentally in this case again, the filter 68 may also be disposed in advance on the plate-shaped member 64 together with the fuel feed passage pipe 61 and the fuel return passage pipe 62 as shown in Fig. 5, and the plate-shaped member 64 in this state be fitted to the fuel tank body 36. Further in this case, if the return port 43 is directed toward the inlet 39, these elements may be shifted in position in the horizontal direction as shown in Fig. 5. The return port 43 may also be disposed directly opposite the inlet 39 in the same way as described above.

## Claims

1. A fuel tank (30) provided with a fuel tank body (36), a fuel feed passage (41) having an inlet (39) opening into the fuel tank body, and a fuel return passage having a return port (43) opening into said fuel tank body, wherein the fuel feed passage is arranged to accept fuel through the inlet for feeding it to a fuel pump (46) of a fuel injection system (40); wherein the fuel return passage is arranged to return surplus fuel from said fuel injection system into said fuel tank body through said return port; and wherein said return port of said fuel return passage is directed toward the vicinity of said inlet of said fuel feed passage;
**characterised in that** said fuel feed passage (41) and said fuel return passage (44) are positioned in the bottom part (52) of said fuel tank body; wherein said fuel return passage, after rising from said bottom part, bends convexly upward, with said return port (43) directed toward said inlet (39).

2. A fuel tank (30) as claimed in Claim 1, wherein said fuel feed passage (41) and said fuel return passage (44) are disposed on a common plate-shaped member (64) and fitted to said fuel tank body (36) via the plate-shaped member.

3. A fuel tank (30) as claimed in Claims 1 or 2, wherein said inlet (39) of said fuel feed passage (41) is integrally provided with a filter (68).

4. A fuel tank (30) as claimed in any of Claims 1 to 3, wherein said fuel tank is installed on a saddle-riding type four-wheeled vehicle (11).

## Patentansprüche

1. Kraftstofftank (30) mit einem Kraftstofftankkörper (36), einer Kraftstoffzuführpassage (41), die einen Einlass (39) aufweist, der sich in den Kraftstofftankkörper öffnet, und einer Kraftstoffrückführpassage, die einen Rückführstutzen (43) aufweist, der sich in den Kraftstofftankkörper öffnet, wobei die Kraftstoffzuführpassage angeordnet ist, um Kraftstoff durch den Einlass aufzunehmen, um ihn einer Kraftstoffpumpe (46) eines Kraftstoffeinspritzsystems (40) zuzuführen; wobei die Kraftstoffrückführpassage angeordnet ist, um Überschusskraftstoff aus dem Kraftstoffeinspritzsystem in den Kraftstofftankkörper durch den Rückführstutzen zurückzuführen, und wobei der Rückführstutzen der Kraftstoffrückführpassage in die Nähe des Einlasses der Kraftstoffzuführpassage gerichtet ist;
**dadurch gekennzeichnet, dass** die Kraftstoffzuführpassage (41) und die Kraftstoffrückführpassage (44) im Unterteil (52) des Kraftstofftankkörpers angeordnet sind; wobei die Kraftstoffrückführpassage sich nach dem Ansteigen aus dem Unterteil konvex aufwärts krümmt, wobei der Rückführstutzen (43) auf den Einlass (39) gerichtet ist.

2. Kraftstofftank (30) nach Anspruch 1, wobei die Kraftstoffzuführpassage (41) und die Kraftstoffrückführpassage (44) auf einem gemeinsamen plattenförmigen Bauteil (64) angeordnet sind und mittels des plattenförmigen Bauteils an dem Kraftstofftankkörper (36) angebracht sind.

3. Kraftstofftank (30) nach Anspruch 1 oder 2, wobei der Einlass (39) der Kraftstoffzuführpassage (41) integral mit einem Filter (68) bereitgestellt ist.

4. Kraftstofftank (30) nach einem der Ansprüche 1 bis 3, wobei der Kraftstofftank auf einem Vierradfahrzeug (11) vom Sattelreittyp montiert ist.

## Revendications

1. Réservoir de carburant (30) comportant un corps de réservoir de carburant (36), un passage d'alimentation en carburant (41) comportant une admission (39) qui s'ouvre à l'intérieur du corps de réservoir de carburant, et un passage de retour de carburant, ayant un orifice de retour de carburant (43) qui s'ouvre à l'intérieur du corps de réservoir de carburant dans lequel le passage d'alimentation en carburant est aménagé de manière à accepter du carburant au travers de l'admission afin d'alimentation d'une pompe à carburant (46) d'un système d'injection de carburant (40) ; dans lequel le passage de retour de carburant est aménagé de manière à faire revenir le carburant en surplus à l'intérieur dudit corps de réservoir de carburant par l'intermédiaire dudit orifice de retour, et dans lequel ledit orifice de retour dudit passage de retour de carburant est dirigé vers la proximité de ladite admission dudit passage d'alimentation en carburant ;
**caractérisé en ce que** ledit passage d'alimentation en carburant (41) et ledit passage de retour de carburant (44) sont positionnés dans la partie d'embase (52) dudit corps de réservoir de carburant ; dans lequel ledit passage de retour de carburant, une fois qu'il s'élève de la partie d'embase, se courbe de manière convexe vers le haut, ledit orifice de retour de carburant (43) étant dirigé vers ladite admission (39).

2. Réservoir de carburant (30) selon la revendication 1, dans lequel ledit passage d'alimentation en carburant (41) et ledit passage de retour de carburant (44) sont disposés sur un élément commun en forme de plaque (64) et sont montés sur ledit corps de réservoir de carburant (36) par l'intermédiaire d'un élément en forme de plaque.

3. Réservoir de carburant (30) selon la revendication 1 ou la revendication 2, dans lequel ladite admission (39) dudit passage d'admission en carburant (41) comporte un filtre (68) de manière intégrée.

4. Réservoir de carburant (30) selon l'une quelconque des revendications 1 à 3, dans lequel ledit réservoir de carburant est monté sur un véhicule à quatre roues (11) de type à conduite sur selle.
